Europäisches Patentamt

European Patent Office

Office européen des brevets

(11) Veröffentlichungsnummer: **0 457 104 A1**

(12) **EUROPÄISCHE PATENTANMELDUNG**

(21) Anmeldenummer: 91107059.7

(22) Anmeldetag: 02.05.91

(51) Int. Cl.5: **B23K 7/00, B23K 37/047**

(30) Priorität: 12.05.90 DE 4015366

(43) Veröffentlichungstag der Anmeldung:
21.11.91 Patentblatt 91/47

(84) Benannte Vertragsstaaten:
DE FR IT

(71) Anmelder: MESSER GRIESHEIM GMBH
Hanauer Landstrasse 330

W-6000 Frankfurt/Main(DE)

(72) Erfinder: Schroeter, Konrad
Steinheimer Vorstadt 58
W-6450 Hanau 7(DE)
Erfinder: Becker, Werner
Machenheimerstrasse 6
W-6237 Liederbach(DE)

(54) Werkstück-Wechseltisch für Brennschneidmaschinen.

(57) Die Erfindung betrifft einen Werkstück-Wechseltisch für Brennschneidmaschinen mit mindestens zwei Paletten (15, 16), die im Wechsel in den Arbeitsbereich der Brennschneidmaschine transportiert werden können, wobei der Transport die Schritte - Absenken mindestens einer Palette auf eine Ebene unterhalb der anderen Palette, Verschieben der einen Palette unterhalb der anderen Palette in den Arbeitsbereich der Brennschneidmaschine, Verschieben der anderen Palette auf Führungen aus dem Arbeitsbereich der Brennschneidmaschine und Heben der einen Palette auf die Führungen - umfasst.

Eine Verbesserung des Werkstück-Wechseltisches wird gemäß der Erfindung durch das Absenken und Heben der Palette (16) mittels schiefen Ebenen (45 bis 48), die unterhalb der Paletten (15, 16) angeordnet sind, erreicht.

Fig. 1

Die Erfindung betrifft einen Werkstück-Wechseltisch für Brennschneidmaschinen nach dem Oberbegriff des Anspruches 1.

In der Vergangenheit lag ein Schwerpunkt der Rationalisierungsbestrebungen der Brennschneidtechnik im Senken der Hauptzeiten. Diese Bestrebungen werden durch die Entwicklung von Hochleitstungsdüsen, die ein Erhöhen der Schneidgeschwindigkeit bis über 30 % bewirken, belegt. Darüber hinaus ermöglicht das Anwenden der verschiedenen Plasma- oder Laser-Schneidverfahren weitere drastische Geschwindigkeitssteigerungen, so daß die Rüst- und Nebenzeiten zu einem zeitlichen Engpass geworden sind und einen beachtlichen Einfluß auf die Einschaltdauer der Brennschneidmaschine erreicht haben. Zur weiteren Erhöhung der Einschaltzeiten werden daher auf die Anwendung abgestimmte Arbeits- und Transporteinrichtungen eingesetzt. Hier hat der Anwender die Wahl zwischen mehreren Varianten: Einem einfachen Schneidrost auf Stützen, einem Schneidtisch mit ausfahrbarer und abnehmbarer Palette und einem Werkstück-Wechseltisch mit Paternoster-Funktion. Diese zeitsparende Anordnung besteht aus zwei Paletten. Während mit einem thermischen Werkzeug, wie beispielsweise einen Laser- oder Plasmastrahl bzw. einer Autogenflamme, auf der hinteren Palette Werkstücke bearbeitet werden, räumt der Bediener die vordere Palette ab und legt ein neues Werkstück auf. Nach dem Bearbeiten wechseln beide Paletten ihre Position.

Diese beim Laserschneiden bekannten Werkstück-Wechseltische verwenden als Zugmittel Mitnehmerketten, an denen die Paletten über Mitnehmerhebel befestigt sind. Dabei vergrößern die Mitnehmerhebel die Baulänge der Transporteinrichtung erheblich. Eine Schwingungsisolation ist aufgrund der Befestigung der Mitnehmerhebel an den beiden hintereinander angeordneten Zugmitteln nur mit erheblichem Aufwand zu verwirklichen. Es können keine durchgehenden Achsen verwendet werden, so daß die Kettenräder auf jeder Seite von außen angetrieben werden müssen und ein derartiger Werkstück-Wechseltisch eine größere Baubreite aufweist. Eine erhöhte Durchbiegung des Palettenrahmens ist bei dieser Ausbildung gegeben.

Der Erfindung liegt daher die Aufgabe zugrunde, eine Einrichtung zu schaffen, die es ermöglicht, den Palettenwechsel zu verbessern.

Diese Aufgabe wird erfindungsgemäß durch die kennzeichnenden Merkmale des Anspruches 1 gelöst.

Vorteilhafte Weiterbildungen der Erfindung sind in den Unteransprüchen angegeben.

Die mit der Erfindung erzielten Vorteile liegen insbesondere in der Wirtschaftlichkeit bei der Herstellung und der Robustheit während des Betriebseinsatzes bei Brennschneidmaschinen. Erfordernisse, wie integrierbare Schlackenwanne und Rauchabsaugung können vorteilhaft bei dem Werkstück-Wechseltisch nach der Erfindung realisiert werden.

Ein Ausführungsbeispiel der Erfindung ist in der Zeichnung dargestellt und wird im folgenden näher beschrieben.

Es zeigen

Fig. 1     eine Seitenansicht des Werkstück-Wechseltisches bei auf der Führung angeordneter Palette und ausgehobener, auf dem Unterwagen stehender Palette.

Fig. 1b     eine Schnittdarstellung entlang der Linie A - B der Fig. 1

Fig. 2     eine Seitenansicht des Werkstück-Wechseltisches bei abgesenkter Palette.

Fig. 3     eine Seitenansicht des Werkstück-Wechseltisches bei auf der Führung angeordneter Palette und ausgehobener, auf dem Unterwagen stehender Palette.

Fig. 4     ein Prinzipbild der Funktions- und Steuerelemente anhand einer Draufsicht auf Fig. 3.

Fig. 5     eine Ansicht auf die Stirnseite des Werkstück-Wechseltisches.

Fig. 6     eine Draufsicht auf die Trennfuge der Führungen.

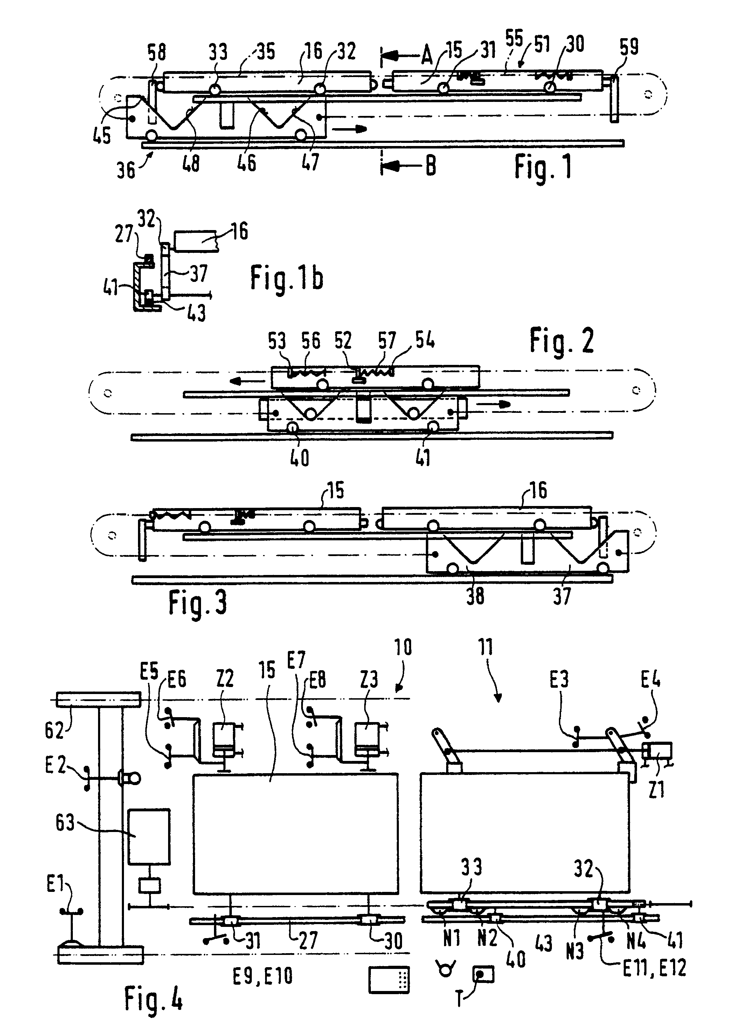

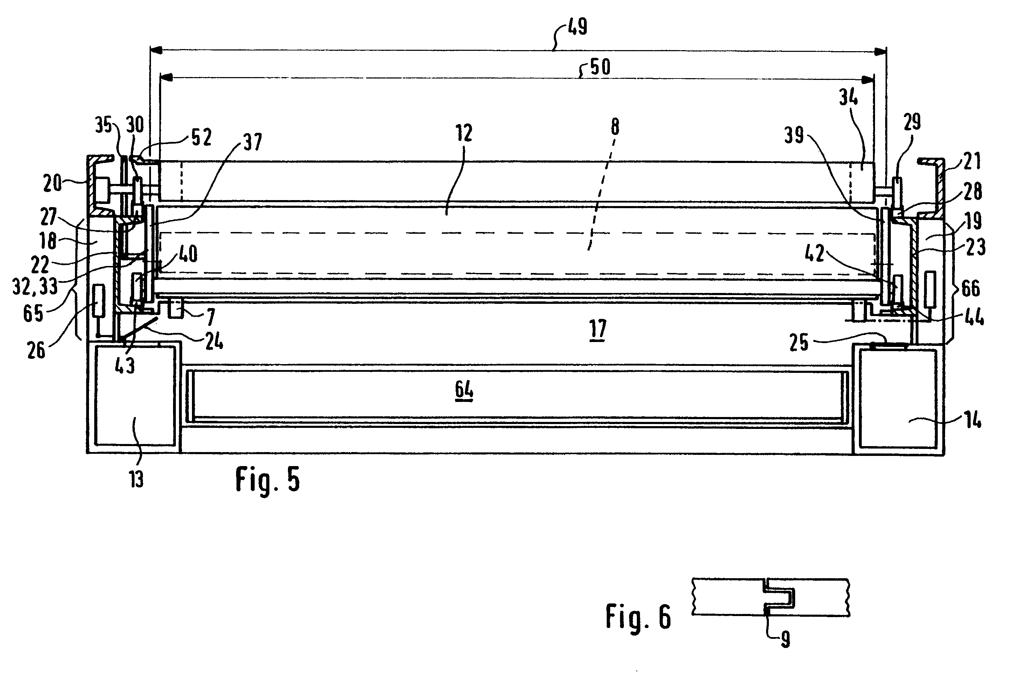

In der Fig. 5 ist eine Ansicht der Stirnseite des Werkstück-Wechseltisches dargestellt, dessen im wesentlichen aus den Absaugkanälen 13, 14, den Streben 18, 19 und den Längsprofilen 20, 21, 22, 23 bestehendes Grundgestell zweiteilig ist. Eine nicht näher dargestellte Trennfuge gewährleistet einen praktischen Transport und verhindert die Übertragung von Schwingungen der Beladestation 11 (Fig. 4) auf die Schneidstation 10. Eine Draufsicht der Trennfuge 9 der Führungen 27, 28, 43, 44, auf denen die Palette 15 bzw. ein Unterwagen 36 in Längsrichtung hin und her bewegt werden, ist in der Fig. 6 dargestellt. Die Absaugkanäle 13, 14 sind als Hohlkörper in das Grundgestell integriert. Die Absaugkanäle 13, 14 weisen Segmentklappen 24, 25 auf, die mit Stellzylindern 26 verbunden sind. Die Segmentklappen öffnen sich paarweise im Schnittbetrieb, wo der Brenner gerade arbeitet. Zwischen den Absaugkanälen ist eine Schlackenwanne 64 angeordnet, die wegen der besseren Handhabbarkeit dreiteilig ausgebildet ist. Ein wesentlicher Teil des oberen Innenraumes ist Bewegungsraum 8 für die Paletten 15, 16. Stirnseitig ist der Innenraum mittels beweglicher Schottwände 12 und außerhalb des Bewegungsraumes der Paletten 15, 16 mittels fest angeordneter Schottwände 17 verschlossen. Die beweglichen Schottwände 12 sind mit Scharnieren befestigt und werden durch Blattfedern 7 in senkrechter Lage gehalten. Beim Einfahren des Unterwagens mit Palette 16 werden sie zwangsweise umgeklappt. Beim Heben der Palette 16 schwenken sie durch die Federkraft wieder hoch.

Im Zwischenraum 65 zwischen den Absaugkanälen 13, 14, oberen Längsprofilen 20, 21, 22, 23 und senkrechten Streben 18, 19 sind Arbeitselemente, wie Zylinder und Endschalter, angeordnet. Diese sind in der Zeichnung nur schematisch dargestellt. Die beiden Paletten 15, 16 bestehen je aus einem Rahmen 34, in dessen Innenraum die Schneidroste oder -stege eingelegt sind Die Führungen 27, 28, 43, 44 (Schienen) sind jeweils auf den Querstegen der Längsprofile 22, 23 angeordnet. Die Paletten weisen Laufrollen 29, 30, 31, 32, 33 auf. Die Paletten 15, 16 werden in Längsrichtung nur auf einer Seite durch Laufrollen 30 bis 33 mit Spurkränzen geführt. Palette 15 läuft mit 4 Laufrollen auf den beiden Führungen 27, 28 hin und her. Die Bewegung geschieht durch ein umlaufendes und mit einem Unterwagen 36 und der Paletten 15 gekoppeltes Zugmittel 35.

Der mit dem Zugmittel 35 gekoppelte Unterwagen 36 ist unter den Führungen 27, 28 angeordnet und besteht im wesentlichen aus 4 Kulissenscheiben 37, 38, 39. Diese sind in Längs- und Querrichtung durch Mittel miteinander verbunden. An jeder Kulissenscheibe ist eine Laufrolle 40, 41, 42 (in den Zeichnungen sind nur drei Laufrollen sichtbar) angebracht. Mit diesen fährt der Unterwagen auf einem unteren Führungspaar 43, 44 in Längsrichtung hin und her. Jede Kulissenscheibe 37, 38, 39 weist V-förmig zueinander angeordnete schiefe Ebenen 45 bis 48 auf, auf deren Laufflächen die an der Palette 16 angeordneten vier Laufrollen 32, 33 beim Heben und Absenken abrollen. Auf jeder Seite der Palette 16 sind mindestens zwei V-förmige schiefe Ebenen 45 bis 48 vorgesehen, die in einem größeren Abstand 49 als die Palettenbreite 50 vorgesehen sind. Die Palette 16 liegt während des Verschiebens der beiden Paletten 15, 16 mit ihren Laufrollen 32, 33 in den Kulen des Unterwagens 36. In den Endpositionen wird sie durch die Relativbewegung zwischen ihr und dem Unterwagen 36 hinauf gedrückt. Der Unterwagen 36 fährt einen längeren Weg als die Paletten 15, 16. Der durch die Relativbewegung zwischen der Palette 16 und dem Unterwagen 36 entstehende Betrag ist auch zwischen dem Zugmittel 35 und der Palette 15 vorhanden. Deshalb ist an der Palette 15 ein Mitnehmer-Mechanismus 51 mit einem Spielraum vorgesehen. Der Mitnehmer-Mechanismus 51 besteht im wesentlichen aus einem mit dem Palettenrahmen 34 verbundenen Mitnehmer 52, der entlang einer von Anschlägen 53, 54 begrenzten Stange 55 verfährt. Die auf der Stange angeordneten Federn 56, 57 dienen zum Abfangen des Stoßes, wenn die Mitnehmer wirksam werden. Wenn die Palette 15 gegen den Anschlag 58 gefahren ist, drücken die Mitnehmer die Federn noch ein Stück zusammen und halten so die Palette 15 in Längsrichtung fest.

In den Fig. 1 bis 3 sind die wesentlichen Elemente des Wechsel-Mechanismuses dargestellt.

Fig. 1 zeigt die Ausgangsstellung, Fig. 2 eine Momentaufnahme während des Wechsels, Fig. 3 die Stellung nach vollzogenem Wechsel.

Bei Bewegung des Zugmittels 35 zieht der obere Strang die Palette 15 von rechts nach links. Gleichzeitig zieht der untere Strang des Zugmittels 35 den Unterwagen 36 nach rechts, dabei rollen die Laufrollen der Palette 16 die schiefe Ebene an den Kulissenscheiben 37 bis 39 hinunter; die Palette 16 senkt sich zwischen die Kulissenscheiben. Anschlagleisten 58, 59 stützen die Palette 16 so gegen die Hangabtriebskraft ab, daß sie nicht nach links bzw. rechts ausweicht. Die Schottwände 12 werden beim Senken der Palette 16 durch ein Führungsblech heruntergeklappt. Sind die Laufrollen 32, 33 bis in die Kule der Kulissenscheiben 37, 38, 39 gelaufen, wird die Palette 16 in Längsrichtung nach rechts mitgenommen. Beim Ausfahren des Unterwagens 36 mit Palette 16 klappen die Schottwände wieder hoch. Die Palette 16 fährt so lange mit dem Unterwagen 36 mit, bis sie gegen die rechte Anschlagleiste 59 läuft. Der Unterwagen 36 läuft weiter und drückt damit die Laufrollen 32, 33 der Palette 16 mit der linken schiefen Ebene wieder nach oben, bis die zu senkende und hebende Palette 16 mit ihren Laufrollen 32, 33 auf den Kulissenscheiben 37, 38, 39 ist. Inzwischen ist die Palette 15 gegen die linke Anschlagleiste gelaufen. Deren Laufrollen 29, 30, 31 sind vom Palettenrahmen 34 weiter entfernt, wie die Laufrollen 32, 33 von Palette 16.

Für das richtige Zusammenspiel aller beteiligten Funktionen sorgen Steuernocken oder Signalgeber zusammen mit einer Motor-Steuereinheit.

Die Signalgeber E1 bis E12 kontrollieren Stellungen oder Funktionen von Maschinenteilen und/oder geben Signale für den jeweiligen nächsten Schritt.

Fig. 4 zeigt eine Draufsicht mit den zusätzlichen Funktionen, den Steuerelementen und die Brennschneidmaschine 62 in Ruhestellung. Von dem Unterwagen 36 und dem Zugmittel 35 ist hier der besseren Übersicht wegen nur eine Seite dargestellt.

Es sind E1, E2 Signalgeber für den Brennschneidmaschinenreferenzpunkt, E3 Signalgeber für eingeschwenkte Blechanschläge, E4 Signalgeber für ausgeschwenkte Blechanschläge, E5, E7 Signalgeber für die Plattenklemmung (Palette fest), E6, E8 Signalgeber für die Palettenklemmung (Palette frei), E9, E11 Signalgeber für die Geschwindigkeitsverringerung und -erhöhung, E10, E12 Signalgeber für die Endposition des Unterwagens und der Palette. N1, N4 Geschwindigkeitssteuernocken, N2, N3 Steuernocken für die Endposition, Z1 Schwenkzylinder für Blechanschläge, Z2, Z3 Zylinder für Plattenklemmung, T Taster für Start.

Der Wechsel der Palette 16 wird wie folgt gesteuert. Der Unterwagen 36 und die Palette 16 befinden sich entsprechend Fig. 1 in der Beladestation.

Die Brennschneidmaschine 62 fährt zu dem Referenzpunkt. E1 und E2 geben an die nicht näher dargestellte Steuerung der Brennschneidmaschine die Rückmeldung, daß die Brennschneidmaschine 62 im Referenzpunkt angeordnet ist. Anschließend wird manuell über einen Taster oder über das Steuerprogramm das Startsignal für den Palettenwechsel ausgelöst. Hierzu fährt Z1 ein und schwenkt die Blechanschläge weg. Damit wird verhindert, daß beim Verschieben der Paletten das Blech nicht durch ungerade Ränder an den Anschlägen hängenbleibt und sich dann auf dem Schneidrost verschiebt. Die Anschläge werden als schwenkbare Hebel ausgebildet. E4 bestätigt, daß diese ausgeschwenkt sind. Danach fahren Z2 und Z3 ein und lösen Palette 16. Palette 15 und 16 sind in der Bearbeitungsstation festgestellt. Sie sind aufgrund des Systems in ihrer jeweiligen Endposition zwar ortsfest; es besteht aber noch ein gewisser Spielraum durch Lagerspiel und Passungstoleranzen der beweglichen Teile. Die Zylinder Z2 und Z3 drücken an einer Seite die Paletten aus dem Lagerspiel. Über E6 und E8 erfolgt die Rückmeldung an die Steuerung, daß die Klemmung geöffnet ist. Liegen an den Motor 63 die Signale E4, E8, E6 an, startet dieser. Motor 63 beschleunigt den Unterwagen, worauf der Unterwagen 36 losfährt. Der Mitnehmer 52 fährt von dem linken Anschlag 53 weg und entspannt die linke Feder 56. Der Unterwagen 36 fährt weiter, woraufhin die Laufrollen 32, 33 der Palette 16 entlang der schiefen Ebene der Kulissenscheiben 37, 38, 39 abrollen. Palette 16 senkt sich. Der Unterwagen 36 fährt weiter, bis die Palette 16 mit den Laufrollen 32, 33 in den Kulen der Kulissenscheiben 37, 38, 39 liegt. N1 bestätigt E9, woraufhin die Geschwindigkeit des Unterwagens 36 erhöht wird. Der Motor 63 beschleunigt den Unterwagen auf volle Geschwindigkeit. Dieser fährt mit dem Unterwagen 36 nach rechts. Dabei wird die rechte Mitnehmerfeder 57 von dem Mitnehmer 52 gegen den Anschlag 54 gedrückt. Palette 15 fährt los. Palette 15 und Unterwagen mit Palette 16 rollen in entgegengesetzter Richtung. N4 bestätigt E11: Geschwindigkeit vermindern. Palette 16 fährt mit den Stützrollen gegen die rechten Anschlagleisten 59. Der Unterwagen 36 fährt weiter, wodurch die Kulissenscheibe die Palette 16 nach oben drückt. Palette 15 fährt gegen die Anschlagleiste 58. Palette 16 hat die Endlage erreicht. Der Unterwagen 36 fährt weiter und drückt die rechte Feder 57 weiter zusammen. N3 bestätigt E12: Motor 63 stopp. Der Motor verzögert den Unterwagen bis zur Geschwindigkeit 0. Hierdurch wird ein Signal an Z1 ausgelöst, so daß die Blechanschläge einschwenken. Gleichzeitig ergeht ein Signal an Z2 und Z3 die Palette 15 zu klemmen. E3 bestätigt, daß die Blechanschläge eingeschwenkt sind. E5 und E7 bestätigen, daß die Palette geklemmt ist. E3, E5, E7 bestätigen der Steuerung, daß der Wechsel beendet ist.

Der Wechsel in die andere Richtung erfolgt umgekehrt, wie der hier dargestellte Wechsel. Der Motor 63 dreht dann in die andere Richtung.

## Patentansprüche

1. Werkstück-Wechseltisch für Brennschneidmaschinen mit mindestens zwei Paletten, die im Wechsel in den Arbeitsbereich der Brennschneidmaschine transportiert werden können, wobei der Transport die Schritte - Absenken mindestens einer Palette auf eine Ebene unterhalb der anderen Palette, Verschieben der einen Palette unterhalb der anderen Palette in den Arbeitsbereich der Brennschneidmaschine, Verschieben der anderen Palette auf Führungen aus dem Arbeitsbereich der Brennschneidmaschine und Heben der einen Palette auf die Führungen - umfasst,
dadurch gekennzeichnet,
daß das Absenken und Heben der Palette (16) mittels schiefen Ebenen (45 bis 48) erfolgt, die unterhalb der Paletten (15, 16) angeordnet sind.

2. Werkstück-Wechseltisch nach Anspruch 1,
dadurch gekennzeichnet,
daß die schiefen Ebenen (45 bis 48) auf jeder Seite der Palette (16) in Form von V-förmigen Laufflächen angeordnet sind und die Palette (16) Rollen (32, 33) aufweist, die auf den Laufflächen abrollbar sind.

3. Werkstück-Wechseltisch nach Anspruch 1 oder 2,
dadurch gekennzeichnet,
daß mindestens zwei V-förmige Laufflächen auf jeder Seite der Palette in einem größeren Abstand (49) als die Palettenbreite (50) vorgesehen sind.

4. Werkstück-Wechseltisch nach einem der Ansprüche 1 bis 3,
dadurch gekennzeichnet,
daß die Laufflächen Bestandteil eines verfahrbaren Unterwagens (36) sind, an den ein umlaufendes Zugmittel (35) befestigt ist, das von einem Motor (63) antreibbar ist.

5. Werkstück-Wechseltisch nach einem der Ansprüche 1 bis 4,
dadurch gekennzeichnet,
daß die Paletten (15, 16) über Mittel (51, 52, 53, 54, 55, 56, 57, 65) mit dem Zugmittel (35) koppelbar sind.

6. Werkstück-Wechseltisch nach einem der Ansprüche 1 bis 5,
dadurch gekennzeichnet,
daß die absenkbare und hebbare Palette (16) und die andere Palette (15) gleichzeitig verschiebbar sind und die auf den Führungen (27, 28) angeordnete andere Palette (15) über einen Mitnehmer-Mechanismus (51) mit dem Zugmittel verbunden ist, der eine Relativbewegung zwischen der anderen Palette (15) und dem Zugmittel (35) ermöglicht.

7. Werkstück-Wechseltisch nach einem der Ansprüche 1 bis 6,
dadurch gekennzeichnet,
daß die Endlage der einen Palette (16) durch Mittel (58, 59) begrenzt ist.

8. Werkstück-Wechseltisch nach einem der Ansprüche 1 bis 7,
dadurch gekennzeichnet,
daß unterhalb des Unterwagens (36) eine Schlackenwanne (64) zwischen zwei Absaugkanälen (13, 14) angeordnet ist,
daß in Verfahrrichtung der Paletten (15, 16) die Stirnseiten mittels in Verfahrrichtung der Palette umklappbarer Schottwände (12) abgeschlossen sind, und daß die Schottwände (12) mittels Federn (8) automatisch in ihre Ausgangslage zurückklappbar sind.

9. Werkstück-Wechseltisch für Brennschneidmaschinen mit mindestens zwei Paletten, die im Wechel in den Arbeitsbereich der Brennschneidmaschine transportiert werden können und die Paletten auf Führungen verfahrbar sind,
dadurch gekennzeichnet,
daß die Führungen Trennfugen (9) aufweisen, die eine Schwingungsübertragung von der im Arbeitsbereich der Brennschneidmaschine angeordneten Palette auf die im Bedienbereich angeordnete Palette verhindern.

Fig. 1

Fig.1b

Fig. 2

Fig.3

Fig.4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 070 491 (INTERCUT MACHINES LTD.) <br> * Ansprüche 1-15; Figuren 1-4 * <br> – – – | 1 | B 23 K 7/00 <br> B 23 K 37/047 |
| A | DE-B-2 417 665 (MITSUBISHI JUKOGYO K.K.) <br> * Spalte 2, Zeile 9 - Spalte 4, Zeile 10; Figuren 1-3 * <br> – – – | 1 | |
| A | US-A-4 214 922 (T. J. RITCHIE ET AL.) <br> * Spalte 2, Zeile 27 - Spalte 4, Zeile 53; Figuren 1-3 * <br> – – – – – | 1 | |

| | RECHERCHIERTE SACHGEBIETE (Int. Cl.5) |
|---|---|
| | B 23 K |

Der vorliegende Recherchenbericht wurde für alle Patentansprüche erstellt

| Recherchenort | Abschlußdatum der Recherche | Prüfer |
|---|---|---|
| Berlin | 23 August 91 | WUNDERLICH J E |